# EUROPEAN PATENT APPLICATION

(11) **EP 1 724 718 A1**
(43) Date of publication of application: **22.11.2006**
(21) Application number: 05253124.1
(22) Date of filing: 20.05.2005
(51) Int. Cl.: G06Q 10/00

(54) **Communication device with capability for handling conditional acceptance of meeting requests**

(71) Applicant: Research In Motion Limited, Waterloo, Ontario N2L 3W8 (CA)
(72) Inventor: Macfarlane, David V., Waterloo, Ontario N2V 2M2 (CA); ADAMS, Neil P., Waterloo, Ontario N2K 4E4 (CA); Wormald, Christopher R., Kitchener, Ontario N2K 4J2 (CA)
(74) Representative: Roberts, Gwilym Vaughan

(57) **Abstract**

Interacting digitally communicating devices cooperate to schedule future meetings include a capability to handle conditional acceptance of meeting requests. For example, a conditional acceptance may be subject to Boolean logic functions of the acceptance status(es) of other meeting invitees (e.g., the condition that another specific one or more invitees also accept the meeting request).

## Description

### BACKGROUND

### 1. Technical Field

This application generally relates to communication devices having a user capability to participate in scheduling of future meetings with other device users. It has particular applicability to wireless communication devices.

### 2. Related Art

Computerized scheduling calendars are now commonplace. In a wired and/or wireless network of computers or computerized communication devices, such personal scheduling calendars may be interactive. That is, a meeting organizer may invite one or more other device users to a future meeting at a particular day and time (and perhaps place). In some circumstances, when such invitations are received they may be automatically acted upon by suitable software agents or modules so as to simply accept such an invitation if other entries on the invitee's calendar permit acceptance. If the invitee's calendar does not permit the proposed meeting, then a denial message may be returned to the meeting organizer. Of course, each individual calendar may be set up by its user so as to block out certain segments of time and/or to require incoming requests to be screened by the user personally before a response is manually made to an incoming request.

Current options for accepting a meeting request from a handheld wireless communication device are to accept or tentatively accept the request. There is no convenient method for an invitee to conditionally accept a meeting request (e.g., based on the response of another invitee).

For example, assume that Bob sends a meeting request to Alice, Eve, and Carol. Further assume that Carol is very busy and only wishes to attend the meeting if Eve attends. There is currently no method for Carol to indicate that her attendance is dependent on Eve's attendance, thus she must first speak to Eve to determine if she will attend and then choose "Tentative" or "Accept". Clearly, this method is slow and inconvenient.

Particular examples of such prior art include US Patent No. 5303145 (Griffin et al.) in which a method and apparatus are disclosed for scheduling and confirming meetings in a data processing system which includes stored calendars for prospective attendees. A prompting screen is presented to a scheduler with blanks for keying in a desired meeting parameters including at least: a list of desired attendees; a desired data range; and a desired time span. A prompting screen is also presented to each prospective attendee to permit an attendee to key in attendee confirmation parameters which specify the conditions under which the prospective attendee will agree to attend a desired meeting. In a depicted embodiment of the invention, a prospective attendee may identify selected attendees who must or must not attend a desired meeting in order to confirm the prospective attendees attendance at that meeting. A comparison of each prospective attendees calendar with the desired meeting parameters and the attendee confirmation parameters is then utilized to determine if an available meeting time complies with all required parameters.

A further example of such prior art is published US Application 2004/064355 (Dorenbosch et al.) which discloses a method of and processing function for a resource for facilitating scheduling a meeting, the method including specifying individuals to participate in the meeting and desired resources for facilitating the meeting; communicating with scheduling agents for the individuals and with a processor function for a resource corresponding to the desired resources; negotiating with the scheduling agents to determine availability of the individual and with the processor function to determine availability of the resource; and scheduling the meeting at a time when the resource and a sufficient number of the individuals are available.

### SUMMARY

We now introduce "Conditional" option for accepting a meeting request. If an invitee selects "Conditional" acceptance then she is presented with the full list of invitees and must select those whose attendance will determine her attendance. The meeting is entered into the invitee's calendar as Tentative and the Conditional response is sent to the meeting organizer.

Since the meeting organizer receives all responses to the request, her device must track all Conditional responses. If all conditions of a Conditional response are satisfied (or explicitly dissatisfied) then the organizer's handheld sends an update to the corresponding invitee. When the invitee's handheld receives the update it then marks the meeting in the invitee's calendar as Accepted if all conditions were satisfied (or it declines the meeting and deletes it from the invitee's calendar if all conditions were explicitly dissatisfied).

For example, assume that Bob sends a meeting request to Alice, Eve, and Carol. Further assume that Carol sends a Conditional response based on Eve accepting the request, and the meeting is entered into Carol's calendar as Tentative. Bob's handheld receives the Conditional response. Later on, Eve accepts the request and an Accept response is sent to Bob. Bob's handheld determines that Carol's conditional response has been satisfied and sends a notification to Carol. Carol's handheld receives the notification and changes the meeting in her calendar from Tentative to Accepted. Note that if Eve had declined the meeting a notification to that effect would have been sent to Carol and Carol's handheld would have then declined the meeting and deleted it from her calendar.

Other logical options may also be defined for a Confidential acceptance. For example, if Bob is setting up a meeting and needs somebody from Product Marketing to attend, A and B work in product marketing and they both get an invitation. Only one of them needs to go. B could go but doesn't want to if A is going so B goes if A isn't going (i.e., a non-exclusive OR or NOR logic condition is defined. This is, arguably, the inverse of the earlier described example where if A goes then B goes and if A doesn't go then B doesn't go. The NOR example extends this to cover the situation where if A goes, B doesn't go and A doesn't go then B goes. This would extend beyond a group of 2 people and to other possible logical functions as will be appreciated.

The capabilities here described may be embodied in hardware, software or a combination of hardware and software and also provide a method for a device user to conditionally accept a meeting request received via a wireless communication device ― and/or to organize a meeting in a way that accommodates such conditional acceptances. The exemplary embodiment is realized at lest in part, by executable computer program code which may be embodies in physical program memory media.

### BRIEF DESCRIPTION OF THE DRAWINGS

These and other objects and advantages of this arrangement will be better understood and appreciated in conjunction with the following detailed description of exemplary embodiments taken together with the accompanying drawings, in which:
FIG. **1** is an overall system wide schematic view of an exemplary wireless email communication system incorporating a mobile wireless communication device with capability for handling conditional acceptance of meeting requests in accordance with one exemplary embodiment;
FIG. **2** is an abbreviated schematic diagram of hardware included within an exemplary mobile wireless communication device;

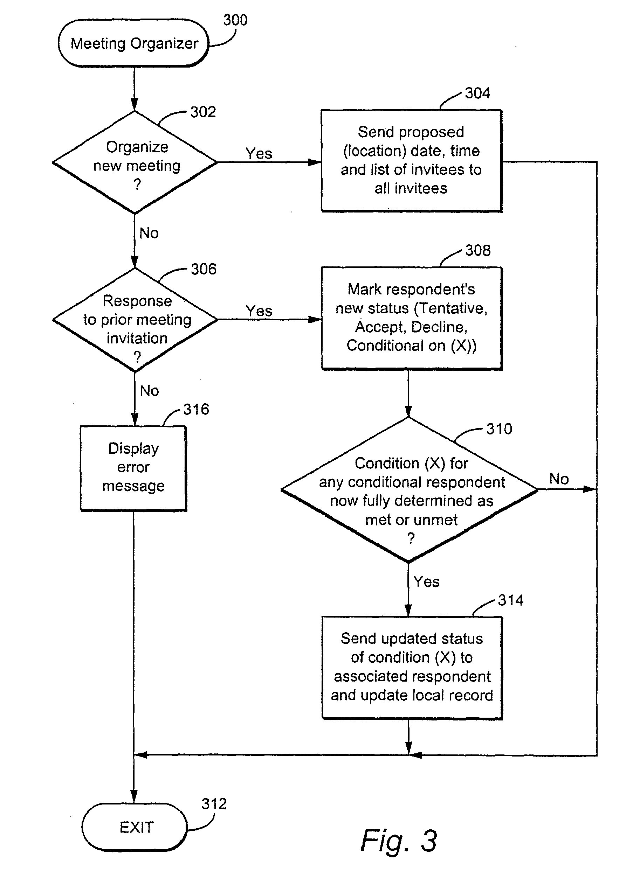

FIGS. **3** is an exemplary abbreviated schematic flow chart of computer software (i.e., program logic) that may be utilized in the device of FIG. **2** providing an option to organize a proposed meeting and to handle subsequent conditional acceptances from invitees;
FIG. **4** is an exemplary abbreviated schematic flowchart of computer software (i.e., program logic) that may be utilized in the device of FIG. **2** to provide user ability to respond to a meeting invitation with a conditional acceptance;
FIG. **5** is an exemplary abbreviated depiction of a meeting status table demonstrating how it can change as a result of handling conditional acceptances; and.
FIG. **6** is an abbreviated table of exemplary Boolean logic functions that might be used to condition the acceptance of one party A upon a logic function of the acceptance of other parties invited to a meeting.

### DETAILED DESCRIPTION OF EXEMPLARY EMBODIMENTS

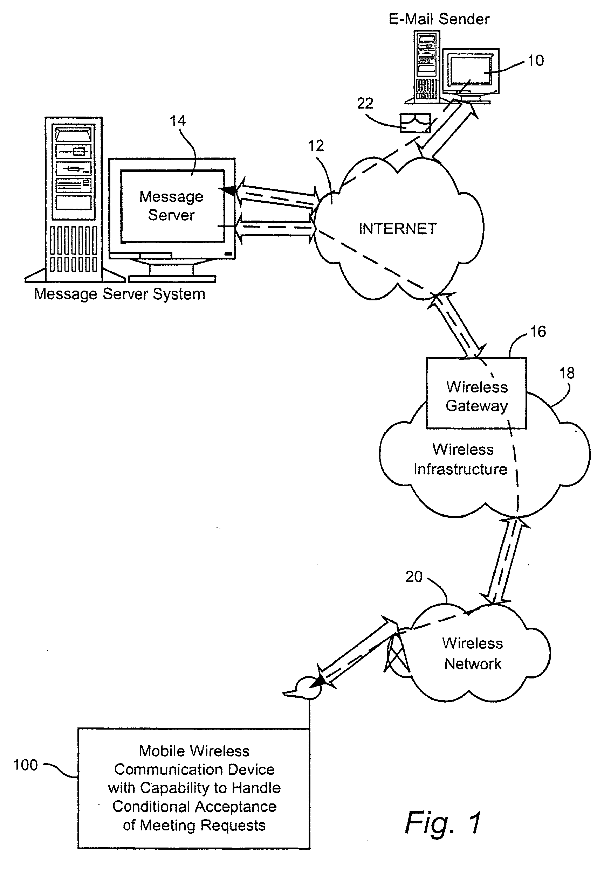

FIG. **1** is an overview of an exemplary communication system in which a wireless communication device **100** may be used. One skilled in the art will appreciate that there may be hundreds of different system topologies. There may also be many message senders and recipients. The simple exemplary system shown in FIG. **1** is for illustrative purposes only, and shows perhaps the currently most prevalent Internet email environment.

FIG. **1** shows an email sender **10,** the Internet **12,** a message server system **14,** a wireless gateway **16,** wireless infrastructure **18,** a wireless network **20** and a mobile communication device **100.**

An email sender **10** may, for example, be connected to an ISP (Internet Service Provider) on which a user of the system has an account, located within a company, possibly connected to a local area network (LAN), and connected to the Internet **12,** or connected to the Internet **12** through a large ASP (application service provider) such as America Online™ (AOL). Those skilled in the art will appreciate that the systems shown in FIG. **1** may instead by connected to a wide area network (WAN) other than the Internet, although email transfers are commonly accomplished through Internet-connected arrangements as shown in FIG. **1.**

The message server **14** may be implemented, for example, on a network computer within the firewall of a corporation, a computer within an ISP or ASP system or the like, and acts as the main interface for email exchange over the Internet **12.** Although other messaging systems might not require a message server system **14,** a mobile device **100** configured for receiving and possibly sending email will normally be associated with an account on a message server. Perhaps the two most common message servers are Microsoft Exchange™ and Lotus Domino™. These products are often used in conjunction with Internet mail routers that route and deliver mail. These intermediate components are not shown in FIG. 1, as they do not directly play a role in the system described below. Message servers such as server **14** typically extend beyond just email sending and receiving; they also include dynamic database storage engines that have predefined database formats for data like calendars, to-do lists, task lists, email and documentation.

The wireless gateway **16** and infrastructure **18** provide a link between the Internet **12** and wireless network **20.** The wireless infrastructure **18** determines the most likely network for locating a given user and tracks the users as they roam between countries or networks. A message is then delivered to the mobile device **100** via wireless transmission, typically at a radio frequency (RF), from a base station in the wireless network **20** to the mobile device **100.** The particular network **20** may be virtually any wireless network over which messages may be exchanged with a mobile communication device.

As shown in FIG. **1,** a composed email message **22** is sent by the email sender **10,** located somewhere on the Internet **12.** This message **22** typically uses traditional Simple Mail Transfer Protocol (SMTP), RFC 822 headers and Multipurpose Internet Mail Extension (MIME) body parts to define the format of the mail message. These techniques are all well known to those skilled in the art. The message **22** arrives at the message sever **14** and is normally stored in a message store. Most known messaging systems support a so-called "pull" message access scheme, wherein the mobile device **100** must request that stored messages be forwarded by the message server to the mobile device **100.** Some systems provide for automatic routing of such messages which are addressed using a specific email address associated with the mobile device **100.** In a preferred embodiment, messages addressed to a message server account associated with a host system such as a home computer or office computer which belongs to the user of a mobile device **100** are redirected from the message server **14** to the mobile device **100** as they are received.

Regardless of the specific mechanism controlling forwarding of messages to mobile device **100,** the message **22,** or possibly a translated or reformatted version thereof, is sent to wireless gateway **16.** The wireless infrastructure **18** includes a series of connections to wireless network **20.** These connections could be Integrated Services Digital Network (ISDN), Frame Relay or T1 connections using the TCP/IP protocol used throughout the Internet. As used herein, the term "wireless network" is intended to include three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Divisional Multiple Access (CDMA) networks, (2) the Group Special Mobile or the Global System for Mobile Communications (GSM) and the General Packet Radio Service (GPRS) networks, and (3) future third-generation (3G) networks like Enhanced Data-rates for Global Evolution (EDGE) and Universal Mobile Telecommunications Systems (UMTS). Some older examples of data-centric networks include the Mobitex™ Radio Network and the DataTAC™ Radio Network. Examples of older voice-centric data networks include Personal Communication Systems (PCS) networks like GSM, and TDMA systems.

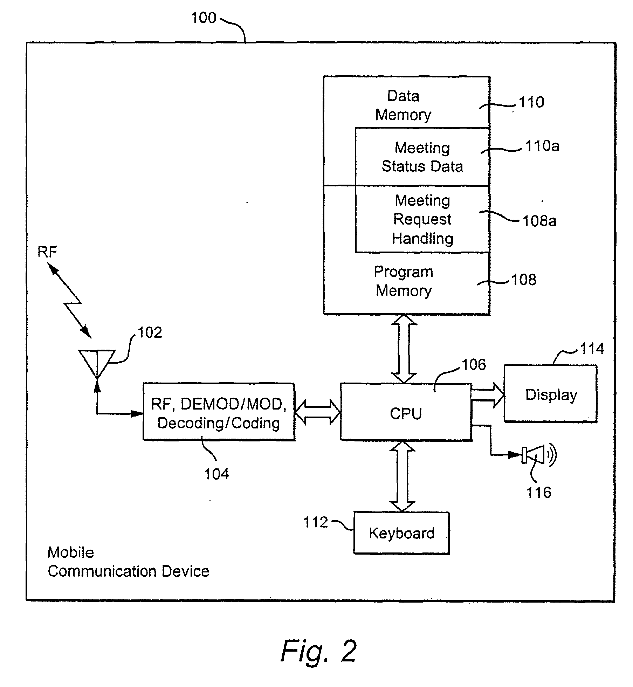

As depicted in FIG. **2,** mobile communication device **100** includes a suitable RF antenna **102** for wireless communication to/from wireless network **20.** Conventional RF, demodulation/modulation and decoding/coding circuits **104** are provided. As those in the art will appreciate, such circuits can involve possibly many digital signal processors (DSPs), microprocessors, filters, analog and digital circuits and the like. However, since such circuitry is well known in the art, it is not further described.

The mobile communication device **100** will also typically include a main control CPU **106** which operates under control of a stored program in program memory **108** (and which has access to data memory **110).** CPU **106** also communicates with a conventional keyboard **112,** display **114** (e.g., an LCD) and audio transducer or speaker **116.** A portion of data memory **110a** is available for storing meeting status data. Suitable computer program executable code is stored in portions of program memory **108a** to provide the capability to handle conditional acceptance of meeting requests.

If a device user wishes to organize a meeting, then an option is provided to enter the meeting organizer logic **300.** Suitable communications handling logic will, in this exemplary embodiment, also direct incoming responses to prior meeting invitations to this same meeting organizer logic **300.**

If a new meeting organization request is detected at **302,** then proposed meeting data is assembled at **304** and transmitted to devices associated with each of the invitees. For example, proposed meeting location, date, time and list of other invitees may be among the data that is assembled and transmitted to other devices inviting respectively corresponding others to join in the proposed meeting.

If a response to a prior meeting invitation by this user is detected at **306,** then at **308** the respondent's new status is noted appropriate status data being maintained on the proposed meeting is updated. For example, the incoming response could be a tentative accept, an accept, a decline, or acceptance conditional on some yet to be determined event X (e.g., an acceptance from some other meeting invitee or a failure of acceptance from some other meeting invitee ― either by expressly declining or by failure to accept within a certain time window). At **310,** a test is made to see whether or not the condition X has been met for any conditional acceptance respondent. That is, a determination is made as to whether the condition(s) X is(are) now fully determined as met or unmet. If not, then the routine is exited at **312.** If so, then an updated status of condition(s) X is sent at **314** to associated respondents and the local meeting status data is also suitably updated before exit is taken at **312.** If neither expected condition is met at **302** and **306,** then a suitable error message is displayed at **316** before exit is taken from this routine at **312.**

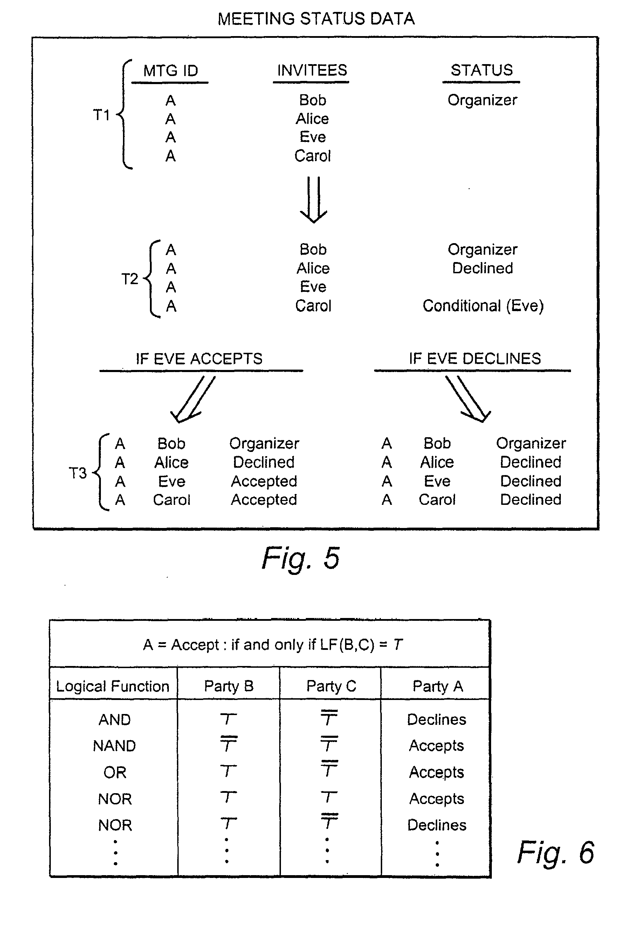

As shown in FIG. **5,** meeting status data may include a meeting ID, the ID of all invitees and their respective statuses. For example, at time T1, a meeting A may be organized by Bob with invitations being sent to Alice, Eve and Carol. At a later time T2, Bob may have received a declined return message from Alice and a Conditional acceptance message from Carol (e.g., Conditional upon whether Eve also accepts). When Eve's response is received at time T3, then if Eve accepts, the status of both Eve and Carol is updated to an acceptance status. However, if Eve declines, then the status of both Eve and Carol is updated to a declined status. As those in the art will appreciate, similar message status data may be maintained in all involved devices.

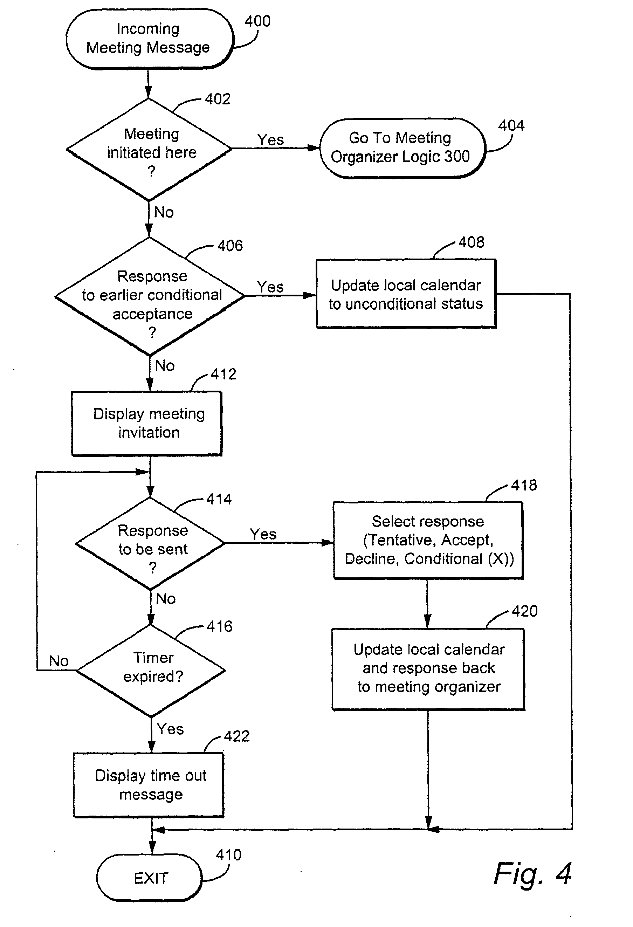

If an incoming meeting invitation is detected by the communications handling logic, then control is transferred to the incoming meeting message logic **400** as depicted in FIG. **4.** A check is made at **402** to see if the device receiving this message was the meeting organizer. If so, then transfer is made to the meeting organizer logic **300** at **404.** If not, then a check is made at **406** to see if the incoming message is in response to an earlier conditional acceptance issued by this particular user device. If so, then the local calendar data is updated at **408** to the appropriate unconditional status before the routine is exited at **410.** Otherwise, a new incoming meeting invitation is displayed at **412** and a waiting loop **414, 416** is entered for the user to determine whether a response is to be sent (assuming, for the moment, that this user has not permitted a totally automated response to occur - in which case an appropriate automated response is selected and sent and local calendar data updated in lieu of **414-420).** If a response is to be made, then a suitable response is selected at **418** and local calendar data is updated and a suitable responsive message is sent back to the meeting organizer at **420** before the routine is exited at **410.** If the user does not make a timely indication of response, then a suitable time out message may be displayed at **422** before the routine is exited at **410.** As those in the art will appreciate, if no response was elected, then suitable flags may be set so that this portion of the logic may be re-entered at the user's option to later send a suitable response.

As depicted in FIG. **6,** a logical function (LF) determining the Conditional acceptance of party A will involve any desired Boolean logic function of any number of other invitees (B, C...).

Although the above description has been made with respect to the details of exemplary embodiments, those skilled in the art will realize that various modifications and variations may be made in such exemplary embodiments while yet retaining many of the novel features and advantages described herein. Accordingly, all such variations and modifications are intended to be included within the scope of the appended claims.

## Claims

1. A method for operating a user-associated device to digitally communicate with other user-associated devices to arrange a meeting between plural users, said method comprising:
(a) responding to a meeting request with a conditional acceptance contingent upon at least one other event; and
(b) receiving a conditional acceptance from the device associated with a meeting invitee and determining whether the respectively associated at least one other event has been met or not.

2. A method as in claim 1 wherein step (b) further comprises:
digitally communicating said determination back to the device associated with the meeting invitee.

3. A method as in claim 2 further comprising:
receiving a response to an earlier-issued conditional acceptance and updating a user calendar in accordance therewith.

4. A method as in claim 1 wherein said at least one other event comprises:
a response to the meeting request from another meeting invitee.

5. A method as in claim 1 wherein at least the device associated with a meeting request maintains meeting status data for each meeting invitee.

6. A method as in claim 1 wherein the device associated with a meeting request performs step (b).

7. A method as in claim 1 wherein said conditional acceptance is contingent upon a Boolean logic function of the meeting acceptance status of at least one other meeting invitee.

8. A user-associated device capable of digital communication with other user-associated devices to arrange a meeting between plural users, said device comprising:
(a) means for responding to a meeting request with a conditional acceptance contingent upon at least one other event; and
(b) means for receiving a conditional acceptance from the device associated with a meeting invitee and determining whether the respectively associated at least one other event has been met or not.

9. A device as in claim 8 wherein (b) further comprises:
means for digitally communicating said determination back to the device associated with the meeting invitee.

10. A device as in claim 9 further comprising:
means for receiving a response to an earlier-issued conditional acceptance and for updating a user calendar in accordance therewith.

11. A device as in claim 8 wherein said at least one other event comprises:
a response to the meeting request form another meeting invitee.

12. A device as in claim 8 wherein at least the device associated with a meeting request maintains meeting status data for each meeting invitee.

13. A device as in claim 8 wherein the device associated with a meeting request includes means (b).

14. A device as in claim 8 wherein said conditional acceptance is contingent upon a Boolean logic function of the meeting acceptance status of at least one other meeting invitee.

15. A digital storage medium containing a computer program which, when executed, implements a method for operating a user-associated device capable of digitally communicating with other user-associated devices to arrange a meeting between plural users, said method comprising:
(a) responding to a meeting request with a conditional acceptance contingent upon at least one other event; and
(b) receiving a conditional acceptance from the device associated with a meeting invitee and determining whether the respectively associated at least one other event has been met or not.

16. A digital storage medium as in claim 15 wherein step (b) further comprises:
communicating said determination back to the device associated with the meeting invitee.

17. A digital storage medium as in claim 16 wherein said method further comprises:
receiving a response to an earlier-issued conditional acceptance and updating a user calendar in accordance therewith.

18. A digital storage medium as in claim 15 wherein said at least one other event comprises:
a response to the meeting request form another meeting invitee.

19. A digital storage medium as in claim 15 wherein at least the device associated with a meeting request maintains meeting status data for each meeting invitee.

20. A digital storage medium as in claim 15 wherein step (b) is performed in a device associated with a meeting request.

21. A digital storage medium as in claim 15 wherein said conditional acceptance is contingent upon a Boolean logic function of the meeting acceptance status of at least one other meeting invitee.

## Amended claims

### Amended claims in accordance with Rule 86(2) EPC.

**1.** A method for operating a user-associated device (100) to digitally communicate with other user-associated devices (100) to arrange a meeting between plural users based on conditional acceptance of meeting instructions, said method being **characterized by**:
(a) responding (418) to a meeting request with a conditional acceptance contingent upon at least one other event;
(b) recording (420) tentative acceptance of said request locally in the device associated with a meeting invitee;
(c) receiving (308) a conditional acceptance from the device (100) associated with a meeting invitee and determining (310) whether the respectively associated at least one other event has been met or not;
(d) digitally communicating (314) said determination back to the device associated with the meeting invitee;
(e) recording (408) acceptance of said request based on said determination or receipt of said digital communication.

**2.** A method as in claim 1 wherein said at least one other event comprises:
a response to the meeting request from another meeting invitee.

**3.** A method as in claim 1 wherein the device (100) associated with a meeting request maintains meeting status data for each meeting invitee.

**4.** A method as in claim 1 wherein the device (100) associated with a meeting request performs steps (c) and (d).

**5.** A method as in claim 1 wherein said conditional acceptance is contingent upon a Boolean logic function of the meeting acceptance status of at least one other meeting invitee.

**6.** A user-associated device (100) capale of digital communication with other user-associated devices (100) to arrange a meeting between plural users based on conditional acceptance of meeting instructions, said device being **characterized by**:
(a) means (418) for responding to a meeting request with a conditional acceptance contingent upon at lest one other event;
(b) means (420) for recording tentative acceptance of said request;
(c) means (308) for receiving a conditional acceptance from the device associated with a meeting invitee and determining (310) whether the respectively associated at least one other event has been met or not;
(c) means (314) for digitally communicating said determination back to the device associated with the meeting invitee; and
(d) means (408) for recording acceptance of said request based on said determination or receipt of said digital communication.

**7.** A device (100) as in claim 6 wherein said at least one other event comprises:
a response to the meeting request from another meeting invitee.

**8.** A device (100) as in claim 6 wherein at least the device (100) associated with a meeting request maintains meeting status data for each meeting invitee.

**9.** A device (100) as in claim 6 wherein said conditional acceptance is contingent upon a Boolean logic function of the meeting acceptance status of at least one other meeting invitee.

**10.** A digital storage medium containing a computer program which, when executed, implements a method for operating a user-associated device (100) capable of digitally communicating with other user-associated devices (100) to arrange a meeting between plural users based on conditional acceptance of meeting instructions, said method **characterized by**:
(a) responding (418) to a meeting request with a conditional acceptance contingent upon at least one other event;
(b) recording (420) tentative acceptance of said request locally in the device associated with a meeting invitee;
(c) receiving (308) a conditional acceptance from the device (100) associated with a meeting invitee and determining (310) whether the respectively associated at least one other event has been met or not;
(d) communicating (314) said determination back to the device (100) associated with the meeting invitee; and
(e) recording (408) acceptance of said request based on said determination or receipt of said digital communication.

**11.** A digital storage medium as in claim 10 wherein said at least on other event comprises:
a response to the meeting request from another meeting invitee.

**12.** A digital storage medium as in claim 10 wherein at least the device (100) associated with a meeting request maintains meeting status data for each meeting invitee.

**13.** A digital storage medium as in claim 10 wherein steps (c) and (d) are performed in a device (100) associated with a meeting request.

**14.** A digital storage medium as in claim 10 wherein said conditional acceptance is contingent upon Boolean logic function of the meeting acceptance status of at least on other meeting invitee.
